# EUROPÄISCHE PATENTSCHRIFT

(11) **EP 0 905 386 B1**
(45) Veröffentlichungstag und Bekanntmachung des Hinweises auf die Patenterteilung: **31.10.2001**
(21) Anmeldenummer: 98810786.8
(22) Anmeldetag: 17.08.1998
(51) Int. Cl.: F16B 13/12

(54) **Spreizdübel**
Expansion dowel
Cheville d'expansion

(30) Priorität: 24.09.1997 DE 19742022
(43) Veröffentlichungstag der Anmeldung: 31.03.1999
(73) Patentinhaber: HILTI Aktiengesellschaft, 9494 Schaan (LI)
(72) Erfinder: Kai-Uwe, Keller, 6800 Feldkirch-Tisis (AT)
(74) Vertreter: Wildi, Roland

(56) Entgegenhaltungen:
- DE-A- 3 309 006
- DE-B- 2 454 677
- US-A- 3 014 399
- US-A- 4 673 320

## Beschreibung

Die Erfindung betrifft einen Spreizdübel gemäss dem Oberbegriff des Patentanspruchs 1.

In der Befestigungstechnik kommen vielfach Spreizdübel zum Einsatz, die einen mit axialen Schlitzen versehenen Dübelkörper mit einer sich in Setzrichtung konisch verjüngenden Durchgangsbohrung und ein konisches Spreizelement aufweisen, das in der Durchgangsbohrung axial verschiebbar ist. Die Verschiebung des Spreizelements erfolgt durch axiale Schläge, die mit einem Hammer oder dergleichen über ein stiftartiges Setzwerkzeug auf das Spreizelement ausgeübt werden. Beim axialen Vortreiben des Spreizlements wird der Dübelkörper radial aufgeweitet und dadurch in einem Bohrloch verankert. Mit diesen üblicherweise aus Metall bestehenden Schlag-Spreizdübeln sind Befestigungen sehr einfach und schnell durchführbar. Nachteilig an diesen bekannten Spreizdübeln ist, dass sie in einem sich aufweitenden Bohrloch keine nachspreizende Funktion aufweisen. Daher ist ihr Einsatzgebiet in der Regel auch bloss auf die Druckzone des Untergrunds beschränkt.

In dem Bestreben, eine gewisses Nachspreizverhalten derartiger Spreizdübel zu erzielen, sind Lösungen vorgeschlagen worden, bei denen das Spreizelement beim Vortreiben in der Durchgangsbohrung im Bohrloch fixierbar ist. Ein derartiger Spreizdübel ist beispielsweise in der DE-A-33 09 006 beschrieben. Dieser bekannte Spreizdübel weist einen zylindrischen Dübelkörper auf, der zum in Setzrichtung weisenden Vorderende des Dübelkörpers hin offene axiale Schlitze und eine Durchgangsbohrung besitzt. Ein Spreizelement ist unter radialem Aufweiten des Dübelkörpers in der Durchgangsbohrung axial verschiebbar. Am Umfang des Spreizelements sind radial abragende Keilnocken angeordnet, die einerseits dem radialen Aufweiten des Dübelkörpers dienen und andererseits das Spreizelement im Untergrund fixieren sollen, damit der Dübelkörper bei Belastung nachspreizen kann. Die Keilnocken sind in erweiterten Bereichen der axialen Schlitze geführt und überragen den Umfang des Dübelkörpers.

Beim Eintreiben des Dübels und des Spreizelements in das Bohrloch graben sich die Keilnocken in die Bohrlochwandung und erzeugen in Längsrichtung verlaufende Rillen. Die Rillen gehen von der Bohrlochmündung aus und weisen eine Tiefe auf, die dem radialen Überstand der Keilnocken gegenüber dem Umfang des Dübekörpers entspricht. In einem sich öffnenden Riss besteht die Gefahr, dass das Spreizelement bei Belastung samt dem Dübelkörper entlang der Rillen in Richtung der Bohrlochmündung wandert und dadurch der Spreizdübel schliesslich herausgezogen wird.

Aufgabe der vorliegenden Erfindung ist es, diesen Nachteilen der Spreizdübel des Stands der Technik abzuhelfen. Es soll ein Spreizdübel geschaffen werden, der auch für die Zugzone geeignet ist und in einem sich öffnenden Riss ausreichende Nachspreizeigenschaften aufweist, um ein plötzliches Versagen eines Befestigungspunktes zu verhindern. Dabei soll der Aufwand für die Verankerung des erfindungsgemässen Spreizdübels in einem Bohrloch gleichbleiben, und es sollen keine zusätzlichen Arbeitsschritte erforderlich sein.

Die Lösung dieser Aufgaben besteht in einem Spreizdübel mit den im kennzeichnenden Abschnitt des Patentanspruchs 1 angeführten Merkmalen. Insbesondere wird durch die Erfindung ein Spreizdübel geschaffen, der einen zylindrischen, wenigstens bereichsweise radial aufweitbaren Dübelkörper besitzt, der zum in Setzrichtung weisenden Vorderende des Dübelkörpers hin offene axiale Schlitze und eine sich im Bereich der axialen Schlitze in Setzrichtung verjüngende Durchgangsbohrung aufweist. Innerhalb des Dübelkörpers ist ein Spreizelement angeordnet, das relativ zum Dübelkörper axial verschiebbar ist. Das Spreizelement ist durch radial abstehende Klemmsegmente in seiner Endposition fixierbar. Die Klemmsegmente sind von in den axialen Schlitzen geführten Vorsprüngen gebildet, die radial von der Aussenfläche einer in der Durchgangsbohrung angeordneten, sich in Setzrichtung verjüngenden Spreizhülse abragen. Die Spreizhülse ist mit einer sich in Setzrichung konisch verjüngenden Bohrung versehen und in axiale Richtung geschlitzt. Das Spreizelement ist wenigstens bereichsweise konisch ausgebildet und unter radialem Aufweiten der Spreizhülse und radialem Ausstellen der Vorsprünge in der Bohrung der Spreizhülse verschiebbar.

Die Klemmsegmente sind an einer separaten, innerhalb des Dübelkörpers angeordneten Spreizhülse angeordnet. Die Klemmsegmente werden erst durch das Eintreiben des Spreizelements radial ausgestellt, indem die Spreizhülse radial aufgeweitet wird. Beim Einsetzen des Spreizdübels überragen die von den von der Aussenfläche der Spreizhülse abragenden Vorsprüngen gebildeten Klemmsegmente den Umfang des Dübelkörpers noch nicht. Erst durch das Vortreiben des Speizelements in die konische Bohrung der Spreizhülse wird die Spreizhülse soweit aufgeweitet, dass die in den axialen Schlitzen des Dübelkörpers geführten Vorsprünge den Umfang des Dübekörpers überragen und sich in die Bohrungswandung graben. Das Eindringen der Vorsprünge in die Bohrungswandung erfolgt nur in radialer Richtung. Eine Ausbildung von Längsrillen beim Einschieben des Spreizdübels und beim Vortreiben des Spreizelements in seine Endposition wird zuverlässig verhindert. Das in der konischen Bohrung der Spreizhülse in seine Endstellung vorgetriebene konische Spreizelement ist durch Reibschluss fixiert und verankert die Spreizhülse über die Vorsprünge formschlüssig in der Bohrlochwandung. Die Vorsprünge sind in den zum Vorderende hin offenen axialen Schlitzen des Dübelkörpers geführt. Dadurch ist der Dübelkörper bei Belastung relativ zur Spreizhülse verschiebbar. Dabei verstärkt der auf die konische Spreizhülse auflaufende Dübelkörper die auf den Spreizkörper wirkende Klemmkraft. Infolge der Fixierung der Spreizhülse bzw. des Spreizelements im Bohrloch und der relativen Verschiebbarkeit des Dübelkörpers zur Spreizhülse kann der erfindungsgemässe Spreizdübel in einem sich öffnenden Riss nachspreizen. Die Verankerung des erfindungsgemäss ausgebildeten Spreizdübels erfolgt auf die für den Anwender gewohnte Art, indem der Spreizdübel in ein vorgereitetes Bohrloch eingesetzt und danach das Spreizelement durch axiale Schläge in seine Endlage vorgetrieben wird.

Indem die Vorsprünge gleichmässig über den Umfang der Spreizhülse verteilt sind erfährt die Spreizhülse beim radialen Aufweiten eine gleichmässige Belastung und kann ein Verkippen des Spreizdübels in Bohrlöchern mit grösseren Durchmessertoleranzen verhindert werden. Die radiale Erstreckung der Vorsprünge ist derart bemessen, dass sie im radial ausgestellten Zustand den grössten Durchmesser des Dübelkörpers jeweils um 0,15 mm bis etwa 0,6 mm überragen. Die Spreizhülse weist dabei einen Aussendurchmesser auf, der ihre freie Verschiebbarkeit gegenüber dem Dübelkörper gewährleistet.

Für die Verankerung der Spreizhülse und des in seiner Endposition reibschlüssig in der konischen Bohrung der Spreizhülse gehaltenen Spreizelements im Bohrloch erweist es sich von Vorteil, wenn die Vorsprünge leistenförmig ausgebildet sind. Ihre Länge ist dabei gleich oder maximal bis etwa 5 mm kleiner als die Länge der axialen Schlitze des Dübelkörpers. Dadurch wird die Fläche der axialen Schlitze des Dübelkörpers bestmöglich ausgefüllt.

Indem die leistenförmigen Vorsprünge eine Breite aufweisen, die kleiner oder im wesentlichen gleich der Weite der axialen Schlitze im Dübelkörper ist, wird die Spreizhülse innerhalb des Dübelkörpers in einer definierten Lage gehalten. Die Weite eines Schlitzes ist dabei derart bemessen, dass die Summe der Weiten aller axialen Schlitze etwa 1/4 bis 3/7 des Umfangs des Dübelkörpers beträgt. Dadurch bleibt genügend Aussenfläche für die reibschlüssige Verankerung des Dübelkörpers im Bohrloch erhalten.

Aus Gründen einer symmetrischen Belastung des Spreizhülse bei der Verankerung ist es zweckmässig, eine gerade Anzahl von leistenförmigen Vorsprüngen vorzusehen, wobei einander jeweils zwei Vorsprünge diametral gegenüber liegen.

Die innerhalb des Dübelkörpers beweglich angeordnete Spreizhülse weist mit Vorteil eine Wandstärke auf, die etwa 0,3 mm bis etwa 1,5 mm beträgt. Bei diesen Wandstärken ist ein zuverlässiges Aufspreizen der geschlitzten Spreizhülse gewährleistet. Gleichzeitig sind bei der Verankerung ausreichend grosse Schubkräfte übertragbar, ohne dass es zu einem Blockieren des Speizelements durch Verfliessen des Materials kommt.

Die Innenwandung und die Aussenfläche der konisch ausgebildeten Spreizhülse verlaufen gegenüber der Achse um etwa 2° bis etwa 8°, vorzugsweise um etwa 3,5° geneigt. Bei diesen Neigungswinkeln ist ein ausreichendes radiales Aufspreizen gewährleistet und sind gleichzeitig die für das Eintreiben des Spreizelements erforderlichen Kräfte noch verhältnismässig gering und können zuverlässig durch Hammerschläge aufgewendet werden.

Der Neigungswinkel der die konische Durchgangsbohrung begrenzenden Innenwandung des Dübelkörpers ist im Bereich der axialen Schlitze gleich oder grösser dem Neigungswinkel der Aussenfläche der Spreizhülse. Auf diese Weise ausgebildet, ist ein ausreichendes Nachspreizen des Dübelkörpers bei Belastung gewährleistet.

Die Länge des Spreizelements beträgt etwa zwei Drittel bis die gesamte Länge der axialen Schlitze des Dübelkörpers. Dadurch wird die Spreizhülse über einen möglichst grossen Bereich ihrer Längserstreckung mit Spreizkräften beaufschlagt. Das Spreizelement ragt vorzugsweise in seiner Ausgangsposition etwa 2 mm bis etwa 5 mm in die konische Bohrung der Spreizhülse. Dadurch ist es bereits zu Beginn des Spreizvorgangs, beim ersten axialen Schlag, in der Bohrung der Spreizhülse geführt.

Im folgenden wird die Erfindung unter Bezugnahme auf ein in den Figuren schematisch dargestelltes Ausführungsbeispiel näher erläutert. Es zeigen:
- Fig. 1: eine Ansicht der Bestandteile des erfindungsgemässen Spreizdübels; und
- Fig. 2: den Spreizdübel aus Fig. 1 in auseinandergezogener Ansicht.

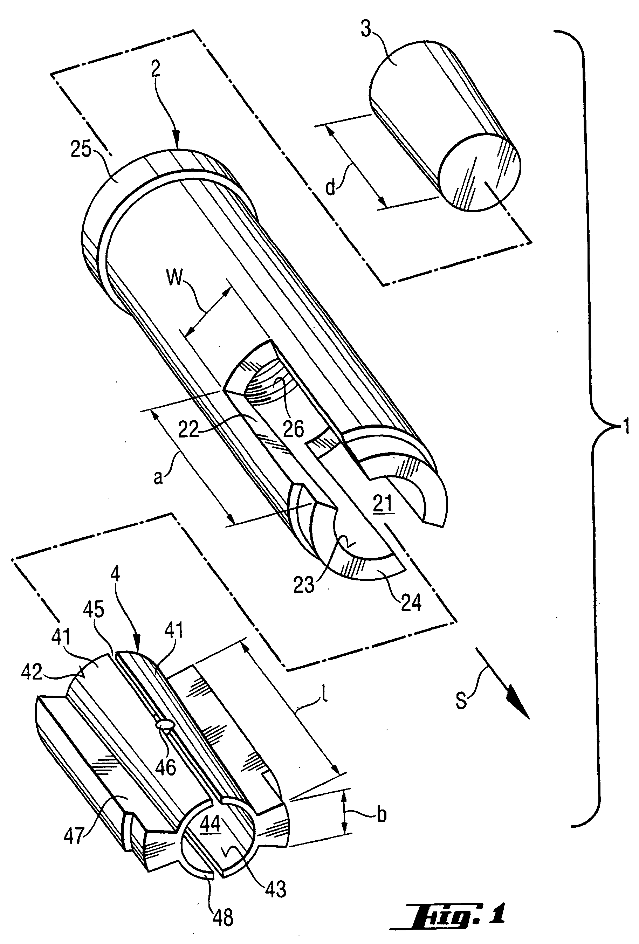

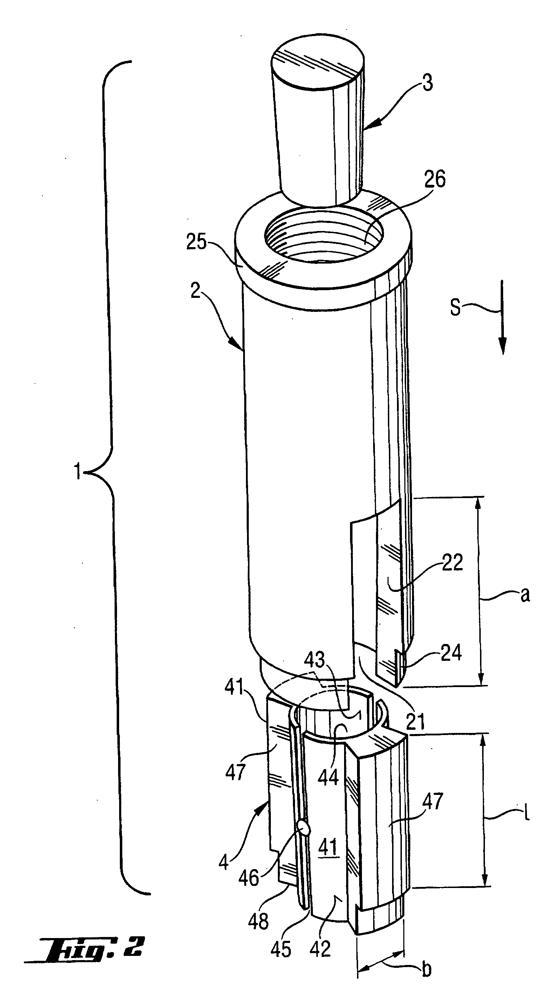

Das in Fig. 1 und 2 beispielsweise dargestellte Ausführungsbeispiel des erfindungsgemässen Spreizdübels ist gesamthaft mit 1 bezeichnet. Es umfasst einen Dübelkörper 2, ein Spreizelement 3 und eine Spreizhülse 4. Der Dübelkörper 2 ist von zylindrischer Gestalt und besitzt eine axial verlaufende Durchgangsbohrung 21 und axiale Schlitze 22, die zum in Setzrichtung S weisenden Vorderende 24 des Dübelkörpers 2 offen ausgebildet sind. Die axialen Schlitze 22 können sich, wie dargestellt, nur über einen Teil der axialen Länge des Dübelkörpers erstrecken. Sie können auch entlang der gesamten Länge des Dübelkörpers 2 vorgesehen sein. Die axialen Schlitze 22 verleihen dem Dübelkörper 2 die zum Aufspreizen erforderliche Flexibilität. Im Bereich der axialen Schlitze 22 weist die Durchgangsbohrung 21 einen sich in Richtung des Vorderendes 24 verjüngenden Innendurchmesser auf. Am rückwärtigen Abschnitt des Dübelkörpers 2 ist ein Lastangriffsmittel vorgesehen. Im dargestellten Ausführungsbeispiel wird das Lastangriffsmittel von einem Innengewinde 26 gebildet. Der Dübelkörper 2 kann, wie dargestellt, an seinem rückwärtigen Ende mit einem Ringbund 25 ausgestattet sein, der ein Abstützen des Dübelkörpers 2 an der Mündung eines Bohrlochs erlaubt.

Der Dübelkörper 2 ist, wie bei den aus dem Stand der Technik bekannten Schlagspreizdübeln, durch Relatiwerschiebung eines Spreizelements 3 zum Dübelkörper 2 aufspreizbar. Zum Unterschied von den bekannten Schlagspreizdübeln ist das Spreizelement 3 nicht unmittelbar in der Durchgangsbohrung 21 des Dübelkörpers 2 verschiebbar. Gemäss der Erfindung ist in der Durchgangsbohrung 21 des Dübelkörpers 2 eine Spreizhülse 4 angeordnet, die mit einer axialen Bohrung 44 versehen ist, in der das Spreizelement 3 axial verschiebbar geführt ist. Die Spreizhülse 4 ist mit Längsschlitzen 45 versehen, die sich, wie dargestellt, über ihre gesamte Länge I erstrecken können. Beispielsweise sind die durch die Längsschlitze 45 gebildeten Hülsensegmente 41 durch aufbrechbare Schweisspunkte 46 oder dergleichen miteinander verbunden. Die Spreizhülse 4 weist eine konische Aussenkontur auf und verjüngt sich zu ihrem in Setzrichtung S weisenden Vorderende 48. Die axiale Bohrung 44 der Spreizhülse 4 ist gleichfalls konisch ausgebildet und verjüngt sich analog zur Aussenkontur der Spreizhülse 4. Dabei verlaufen die Innenwandung 43 und die Aussenfläche 42 der Spreizhülse 4 gegenüber der Achse um etwa 2° bis etwa 8°, vorzugsweise um etwa 3,5 ° geneigt. Die Spreizhülse 4 weist eine Mindestwandstärke auf, die etwa 0,3 mm bis etwa 1,5 mm beträgt.

An der Spreizhülse 4 sind leistenartig ausgebildete Vorsprünge 47 vorgesehen, die von der Aussenfläche 42 radial abragen und sich parallel zur Achse der Speizhülse 4 erstrecken. Die leistenartigen Vorsprünge 47 weisen eine Länge I auf, die gleich oder maximal 5 mm kleiner ist als die axiale Länge a der axialen Schlitze 22 des Dübelkörpers 2. Die Breite b der leistenartigen Vorsprünge 47 ist im wesentlichen gleich oder geringfügig kleiner als die Weite w der axialen Schlitze 22 des Dübelkörpers 2. Die Weite w eines Schlitzes ist dabei derart bemessen, dass die Summe der Weiten aller axialen Schlitze etwa 1/4 bis 3/7 des Umfangs des Dübelkörpers 2 beträgt. Die gewählte Länge I und Breite b der leistenartigen Vorsprünge 47 zusammen mit der Aussenkontur der Speizhülse 4 ermöglicht eine Relativbewegung der Spreizhülse 4 und des Dübelkörpers 2. Dabei sind die leistenartigen Vorsprünge 47 der Spreizhülse 4 in den axialen Schlitzen 22 des Dübelkörpers 2 geführt. Der radiale Überstand der leistenartigen Vorsprünge 47 gegenüber der Aussenfläche 42 der Spreizhülse 4 ist derart bemessen, dass die leistenartigen Vorsprünge im radial aufgespreizten Zustand der Spreizhülse 4 den grössten Durchmesser des Dübelkörpers 2 um jeweils etwa 0,15 mm bis etwa 0,6 mm überragen.

Fig. 2 zeigt den erfindungsgemässen Spreizdübel 1 in auseinandergezogenem Zustand. Zur Vormontage wird die Spreizhülse 4 vom Vorderende 24 des Dübelkörpers 2 her in die Durchgangsbohrung 21 eingeschoben. Das konusförmige Spreizelement 3 wird vom rückwärtigen Ende in die Durchgangsbohrung 21 eingeführt und in die axiale Bohrung 44 der Spreizhülse eingeführt. Das Spreizelement 3 weist eine axiale Länge d auf, die etwa zwei Drittel bis die gesamte Länge a der axialen Schlitze 22 des Dübelkörpers 2 beträgt. Im vormontierten Zustand des Spreizdübels 1 ragt das Spreizelement etwa 2 mm bis etwa 5 mm in die Bohrung 44 der Spreizhülse 4 hinein. Dadurch wird die Spreizhülse 4 gerade soweit radial aufgeweitet, dass sie verliersicher in der Durchgangsbohrung 21 des Dübelkörpers 2 gehalten ist. Dabei überragen die in den axialen Schlitzen 22 aufgenommenen und geführten leistenartigen Vorsprünge 47 den Umfang des Dübelkörpers 2 noch nicht.

Zum Verankern des erfindungsgemässen Spreizdübels 1 wird dieser zunächst im vormontierten Zustand in ein vorbereitetes Bohrloch eingeschoben. Danach wird mit Hilfe eines bekannten stiftartigen Setzwerkzeuges das konische Spreizelement 3 durch axiale Schläge, beispielsweise mit einem Hammer, in die konische axiale Bohrung 44 der Spreizhülse 4 eingetrieben. Dabei werden die Schweisspunkte 46 an den Längsschlitzen 45 der Spreizhülse aufgebrochen und die Spreizhülse 4 wird radial aufgeweitet. Durch das Aufweiten der Spreizhülse 4 werden die leistenartigen Vorsprünge 47 radial in die Bohrlochwandung eingepresst. Durch die Hinterpressung der leistenartigen Vorsprünge 47 in der Bohrlochwandung wird das in seiner Endposition reibschlüssig in der axialen Bohrung 44 gehaltene Spreizelement 3 über die Spreizhülse 4 formschlüssig im Bohrloch fixiert. Der Dübelkörper 2, der beim Aufspreizen der Spreizhülse 4 gleichfalls in einem gewissen Umfang mitaufgespreizt wird, kann sich bei Belastung wegen der an seinem Vorderende 24 mündenden axialen Schlitze 22 gegenüber der Spreizhülse 4 axial verschieben. Die Innenwandung 23 des Dübelkörpers verjüngt sich zum Vorderende 24 des Dübelkörpers 2 im selben Ausmass konisch wie die Aussenfläche 42 der Spreizhülse (4) oder übertrifft deren Konizität noch. Bei Belastung und insbesondere bei einer axialen Relativverschiebung in einem sich öffnenden Riss läuft die Innenwandung 23 des Dübelkörpers 2 gegen die konische Aussenfläche 42 der Spreizhülse 4 und der Dübelkörper 2 spreizt nach.

## Patentansprüche

1. Speizdübel umfassend einen zylindrischen, wenigstens bereichsweise radial aufweitbaren Dübelkörper (2), der zum in Setzrichtung (S) weisenden Vorderende (24) des Dübelkörpers (2) hin offene axiale Schlitze (22) und eine sich im Bereich der axialen Schlitze (22) in Setzrichtung (S) verjüngende Durchgangsbohrung (21) aufweist, und ein in der Durchgangsbohrung (21) angeordnetes Spreizelement (3), das relativ zum Dübelkörper (2) axial verschiebbar und durch radial abstehende Klemmsegmente in seiner Endposition fixierbar ist, **dadurch gekennzeichnet, dass** die Klemmsegmente von in den axialen Schlitzen (22) geführten Vorsprüngen (47) gebildet sind, die radial von der Aussenfläche (42) einer innerhalb des Dübelkörpers (2) angeordneten, sich in Setzrichtung (S) verjüngenden Spreizhülse (4) abragen, die mit einer sich in Setzrichung (S) konisch verjüngenden Bohrung (44) versehen ist und in axiale Richtung geschlitzt ist, wobei das Spreizelement (3) wenigstens bereichsweise konisch ausgebildet ist und unter radialem Aufweiten der Spreizhülse (4) und radialem Ausstellen der Vorsprünge (47) in der Bohrung (44) der Spreizhülse (4) verschiebbar ist.

2. Spreizdübel nach Anspruch 1, **dadurch gekennzeichnet, dass** die Vorsprünge (47) gleichmässig über den Umfang der Spreizhülse (4) verteilt sind und im radial ausgestellten Zustand den grössten Durchmesser des Dübelkörpers (2) um jeweils etwa 0,15 mm bis etwa 0,6 mm überragen.

3. Spreizdübel nach Anspruch 1 oder 2, **dadurch gekennzeichnet, dass** die Vorsprünge (47) leistenförmig ausgebildet sind und eine axiale Länge (I) aufweisen, die kleiner oder gleich der Länge (a) der axialen Schlitze (22) des Dübelkörpers (2) ist.

4. Spreizdübel nach Anspruch 3, **dadurch gekennzeichnet, dass** die leistenförmigen Vorsprünge (47) eine Breite (b) aufweisen, die kleiner oder im wesentlichen gleich der Weite (w) der axialen Schlitze (22) im Dübelkörper (2) ist, wobei die Summe der Weiten (w) aller Schlitze etwa 1/4 bis 3/7 des Umfangs des Dübelkörpers (2) beträgt.

5. Spreizdübel nach Anspruch 3 oder 4, **dadurch gekennzeichnet, dass** wenigstens zwei leistenförmige Vorsprüngen (47) vorgesehen sind.

6. Spreizdübel nach einem der vorangehenden Ansprüche, **dadurch gekennzeichnet, dass** die Spreizhülse (4) eine Wandstärke aufweist, die etwa 0,3 mm bis etwa 1,5 mm beträgt.

7. Spreizdübel nach einem der vorangehenden Ansprüche, **dadurch gekennzeichnet, dass** die Innenwandung (43) und die Aussenfläche (42) der Spreizhülse (4) gegenüber der Achse um etwa 2° bis etwa 8°, vorzugsweise um etwa 3,5 geneigt verlaufen.

8. Spreizdübel nach einem der vorangehenden Ansprüche, **dadurch gekennzeichnet, dass** der Neigungswinkel der Innenwandung (23) des Dübelkörpers (2) im Bereich der axialen Schlitze (22) grösser oder gleich dem Neigungswinkel der Aussenfläche (42) der Spreizhülse (4) ist.

9. Spreizdübel nach einem der vorangehenden Ansprüche, **dadurch gekennzeichnet, dass** die Länge (d) des Spreizelements (3) etwa zwei Drittel bis etwa die gesamte Länge (a) der axialen Schlitze (22) des Dübelkörpers (2) beträgt, wobei das Spreizelement (3) in seiner Ausgangsposition etwa 2 mm bis etwa 5 mm in die konische Bohrung (44) der Spreizhülse (4) ragt.

## Claims

1. Expansion dowel, comprising a cylindrical and at least sectionally radially expandable dowel body (2) with open axial slots (22) towards the front end (24) of the dowel body (2) which is oriented in the setting direction (S), and a throughbore (21) which narrows in the setting direction (S) in the area of the axial slots (22), and an expansion element (3) which is arranged in the throughbore (21) and axially displaceable relative to the dowel body (2) and fixed in its end position by radially extending clamping segments, **characterised in that** the clamping segments are formed by protrusions (47) which are guided in the axial slots (22) and protrude radially from the outside surface (42) of an expansion sleeve (4) which is arranged within the dowel body (2) and narrows in the setting direction (S) and which is provided with a bore (44) which conically narrows in the setting direction (S) and is slotted in the axial direction, and the expansion element (3) is at least sectionally of conical design and displaceable under radial expansion of the expansion sleeve (4) and radial extension of the protrusions (47) in the bore (44) of the expansion sleeve (4).

2. Expansion dowel according to Claim 1, **characterised in that** the protrusions (47) are evenly spaced over the circumference of the expansion sleeve (4) and in a radially extended state protrude the largest diameter of the dowel body (2) by respectively between approximately 0.15 mm and approximately 0.6 mm.

3. Expansion dowel according to Claim 1 or 2, **characterised in that** the protrusions (47) are stripshaped and have an axial length (I) which is less or equal the length (a) of the axial slots (22) of the dowel body (2).

4. Expansion dowel according to Claim 3, **characterised in that** the stripshaped protrusions (47) have a width (b) which is less or virtually equal the width (w) of the axial slots (22) in the dowel body (2), and the sum of the widths (a) of all slots is between 1/4 and 3/7 of the circumference of the dowel body.

5. Expansion dowel according to Claim 3 or 4, **characterised in that** at least two stripshaped protrusions (47) are provided.

6. Expansion dowel according to one of the above claims, **characterised in that** the expansion sleeve (4) has a wall thickness of between approximately 0.3 mm and approximately 1.5 mm.

7. Expansion dowel according to one of the above claims, **characterised in that** the inside wall (43) and the outside surface (42) of the expansion sleeve (4) are inclined relative to the axis by between approximately 2° and approximately 8°, preferably by approximately 3.5°.

8. Expansion dowel according to one of the above claims, **characterised in that** the inclination angle of the inside wall (23) of the dowel body (2) in the area of the axial slots (22) is greater or equal the inclination angle of the outside surface (42) of the expansion sleeve (4).

9. Expansion dowel according to one of the above claims, **characterised in that** the length (d) of the expansion element (3) equals between approximately two thirds and approximately the entire length (a) of the axial slots (22) of the dowel body (2), and the expansion element (3) extends in its initial position between approximately 2 mm and approximately 5 mm into the conical bore (44) of the expansion sleeve (4)

## Revendications

1. Cheville à expansion comprenant un corps de cheville (2) cylindrique, pouvant s'élargir radialement au moins par endroits et qui présente des fentes axiales (22), ouvertes vers l'extrémité avant (24), dirigée dans le sens d'enfoncement (S), du corps de cheville (2), ainsi qu'un trou débouchant (21) se rétrécissant dans le sens d'enfoncement (S), dans la zone des fentes axiales (22), et un élément d'expansion (3) qui est disposé dans le trou débouchant (21), qui peut coulisser axialement par rapport au corps de cheville (2) et qui peut être fixé dans sa position terminale par des segments de serrage dépassant radialement, **caractérisée en ce que** les segments de serrage sont formés par des saillies (47) qui passent dans les fentes axiales (22) et qui dépassent radialement de la surface extérieure (42) d'une douille d'expansion (4) disposée à l'intérieur du corps de cheville (2) et qui se rétrécit dans le sens d'enfoncement (S), laquelle douille est pourvue d'un trou (44), se rétrécissant coniquement dans le sens d'enfoncement (S), et est fendue dans la direction axiale, l'élément d'expansion (3) étant conique au moins par endroits et pouvant coulisser dans le trou (44) de la douille expansible (4), en même temps que la douille expansible (4) s'élargit radialement et que les saillies (47) se déploient radialement.

2. Cheville à expansion selon la revendication 1, **caractérisée en ce que** les saillies (47) sont uniformément réparties sur le pourtour de la douille expansible (4) et, à l'état déployé radialement, elles dépassent chacune d'environ 0,15 mm à environ 0,6 mm du plus grand diamètre du corps de cheville (2).

3. Cheville à expansion selon la revendication 1 ou 2, **caractérisée en ce que** les saillies 47 sont en forme de baguette et présentent une longueur axiale (1) qui est inférieure ou égale à la longueur (a) des fentes axiales (22) du corps de cheville (2).

4. Cheville à expansion selon la revendication 3, **caractérisée en ce que** les saillies (4) en forme de baguette présentent une largeur (b) qui est inférieure ou sensiblement égale à l'ouverture (w) des fentes axiales (22) dans le corps de cheville (2), la somme des ouvertures (w) de toutes les fentes étant d'environ 1/4 à 3/7 de la circonférence du corps de cheville (2).

5. Cheville à expansion selon la revendication 3 ou 4, **caractérisée en ce qu'**au moins deux saillies (4) en forme de baguettes sont prévues.

6. Cheville à expansion selon l'une des revendications précédentes, **caractérisée en ce que** la douille expansible (4) présente une épaisseur de paroi qui est de 0,3 mm environ à 1,5 mm environ.

7. Cheville à expansion selon l'une des revendications précédentes, **caractérisée en ce que** la paroi intérieure (43) et la surface extérieure (42) de la douille expansible (4) s'étendent inclinées d'environ 2° à environ 8°, de préférence d'environ 3,5°, par rapport à l'axe.

8. Cheville à expansion selon l'une des revendications précédentes, **caractérisée en ce que** l'angle d'inclinaison de la paroi intérieure (23) du corps de cheville (2) dans la zone des fentes axiales (22) est supérieur ou égal à l'angle d'inclinaison de la surface extérieure (42) de la douille expansible (4).

9. Cheville à expansion selon l'une des revendications précédentes, **caractérisée en ce que** la longueur (d) de l'élément d'expansion (3) est d'environ deux tiers à environ toute la longueur (a) des fentes axiales (22) du corps de cheville (2), l'élément d'expansion (3) dans sa position initiale pénétrant d'environ 2 mm à environ 5 mm dans le trou conique (44) de la douille expansible (4).
